# FASCICULE DE BREVET EUROPEEN

(11) **EP 3 739 770 B1**
(45) Date de publication et mention de la délivrance du brevet: **05.10.2022**
(21) Numéro de dépôt: 20171657.8
(22) Date de dépôt: 27.04.2020
(51) Int. Cl.: H04B 7/08, H04B 7/204, H04B 7/185

(54) **SYSTÈME DE TELECOMMUNICATION PAR SATELLITES À PROCESSEUR NUMÉRIQUE TRANSPARENT ET SAUT DE FAISCEAUX**
SATELLITENTELEKOMMUNIKATIONSSYSTEM MIT TRANSPARENTEM DIGITALPROZESSOR UND BEAM-HOPPING
SATELLITE TELECOMMUNICATION SYSTEM WITH TRANSPARENT DIGITAL PROCESSOR AND BEAM HOPPING

(30) Priorité: 16.05.2019 FR 1905026
(43) Date de publication de la demande: 18.11.2020
(73) Titulaire: THALES, 92400 Courbevoie (FR)
(72) Inventeur: CHARRAT, Bernard, 31100 TOULOUSE (FR); VOISIN, Philippe, 31100 TOULOUSE (FR); DERVIN, Mathieu, 31100 TOULOUSE (FR)
(74) Mandataire: Atout PI Laplace

(56) Documents cités:
- EP-A2- 2 549 663
- US-A1- 2006 211 452
- PONTANO B A ET AL: "Processing and nonprocessing satellite architectures for support of ATM traffic", MILITARY COMMUNICATIONS CONFERENCE, 1993. MILCOM '93. CONFERENCE RECOR D. COMMUNICATIONS ON THE MOVE., IEEE BOSTON, MA, USA 11-14 OCT. 1993, NEW YORK, NY, USA,IEEE, US, vol. 1, 11 octobre 1993 (1993-10-11), pages 242-246, XP010142698, DOI: 10.1109/MILCOM.1993.408513 ISBN: 978-0-7803-0953-1

## Description

La présente invention porte sur un système de télécommunication par satellites.

Il est connu des systèmes de télécommunication par satellites à couverture géographique multi-spots (multi-zone).

La mise en œuvre de sauts de faisceaux, ou "beam hopping" en langue anglaise, en voie aller d'un système de télécommunication multifaisceaux par satellites permet d'apporter une flexibilité ou adaptation dynamique dans la distribution de la capacité de communication (débit de données) entre plusieurs faisceaux, tout en optimisant l'utilisation des amplificateurs haute puissance, tels des tubes à ondes progressives ou des amplificateurs de puissance à état solide d'acronyme SSPA pour "Solid State Power Amplifier" en langue anglaise, générant les faisceaux.

On entend par amplificateur haute puissance un amplificateur capable d'amplifier jusqu'à des puissances de 10 à 200 W.

Cependant, en voie retour, l'utilisation de sauts de faisceaux ou beam hopping présente des inconvénients, tels la réduction du débit crête atteignable en voie retour à spécifications de terminal identiques, et un surcoût et une masse augmentée car la charge utile nécessite aussi d'inclure les équipements permettant d'effectuer les sauts de faisceaux en voie retour (tels des commutateurs ferrite).

On entend par débit crête le débit maximal qu'un utilisateur peut obtenir.

Il est connu de ne pas utiliser de sauts de faisceaux en voie retour et de garder alors une voie retour avec une allocation statique des ressources (bande de fréquences et puissance) par faisceau.

Cependant, dans un tel mode de réalisation, le ratio de capacité de communication entre la voie aller et la voie retour est variable car la capacité de la voie aller est ajustable contrairement à celle de la voie retour. En outre, la voie retour doit alors être surdimensionnée pour ne pas obtenir un ratio de capacité trop faible dans des "hot spots" (zones de demande de capacité élevée) où l'on allouerait beaucoup de ressources en Beam Hopping sur la voie aller.

Un but de l'invention est de pallier les problèmes précédemment cités.

Aussi, il est proposé, selon un aspect de l'invention, un système de télécommunications multifaisceaux par satellites comprenant au moins un satellite muni d'au moins un amplificateur haute puissance, un processeur numérique, et des moyens de mise en œuvre de saut de faisceaux en voie aller, sans sauts de faisceaux en voie retour, le processeur numérique étant configuré pour numériser les faisceaux en voie retour et les agréger, la largeur de bande des faisceaux en voie retour étant proportionnelle à la répartition temporelle sur les faisceaux en voie aller.

Ainsi, un utilisateur isolé dans un faisceau ne voit pas son débit crête réduit en voie retour, et les mécanismes de sauts de faisceaux ne sont pas nécessaires en voie retour.

Dans un mode de réalisation, l'amplificateur haute puissance est un tube à ondes progressives ou un amplificateur de puissance à état solide.

Selon un mode de réalisation, le processeur numérique est un processeur numérique transparent ou un processeur numérique régénératif.

Dans un mode de réalisation, le système comprend, par faisceau en voie retour, un amplificateur en amont du processeur.

Ainsi, le niveau de signal est suffisant en sortie de l'amplificateur pour la suite du traitement.

Selon un mode de réalisation, le système comprend, par faisceau en voie retour, un convertisseur de fréquences en aval de l'amplificateur et en amont du processeur numérique.

Ainsi, la fréquence du signal en sortie du convertisseur de fréquences est compatible avec le processeur numérique.

Dans un mode de réalisation le système comprend, par faisceau en voie retour, un multiplexeur en aval du convertisseur de fréquences et en amont du processeur numérique.

Ainsi, on réduit le nombre d'entrées utilisées du processeur numérique.

Selon un mode de réalisation, le système comprend, en voie retour, en aval du processeur numérique, un convertisseur de fréquences, un amplificateur de puissance et une source antenne d'émission, disposés en série.

Ainsi, le signal est converti en fréquences et amplifié de sorte que la communication avec l'utilisateur soit possible.

Il est également proposé, selon un autre aspect de l'invention, un procédé de gestion d'un processeur numérique d'un satellite de système de télécommunications multifaisceaux par satellites à sauts de faisceaux en voie aller et sans sauts de faisceaux en voie retour, dans lequel on numérise les faisceaux en voie retour et on les agrège, la largeur de bande des faisceaux en voie retour étant proportionnelle à la répartition temporelle sur les fisceaux en voie aller.

L'invention sera mieux comprise à l'étude de quelques modes de réalisation décrits à titre d'exemples nullement limitatifs et illustrés par les dessins annexés sur lesquels les figures :
la figure 1 illustre schématiquement des modes de réalisation d'un système, selon divers modes de réalisation de l'invention ;
la figure 2 illustre schématiquement des modes de réalisation d'un système, selon divers modes de réalisation de l'invention ;
la figure 3 illustre schématiquement des modes de réalisation d'un système, selon divers modes de réalisation de l'invention ;
la figure 4 illustre schématiquement des modes de réalisation d'un système, selon divers modes de réalisation de l'invention ;
la figure 5 illustre schématiquement des modes de réalisation d'un système, selon divers modes de réalisation de l'invention ; et
la figure 6 illustre schématiquement des modes de réalisation d'un système, selon divers modes de réalisation de l'invention.

Sur l'ensemble des figures, les éléments ayant des références identiques sont similaires.

Dans la présente description, les modes de réalisation décrits ne sont pas limitatifs, et les caractéristiques et fonctions bien connues de l'homme du métier ne sont pas décrites en détails.

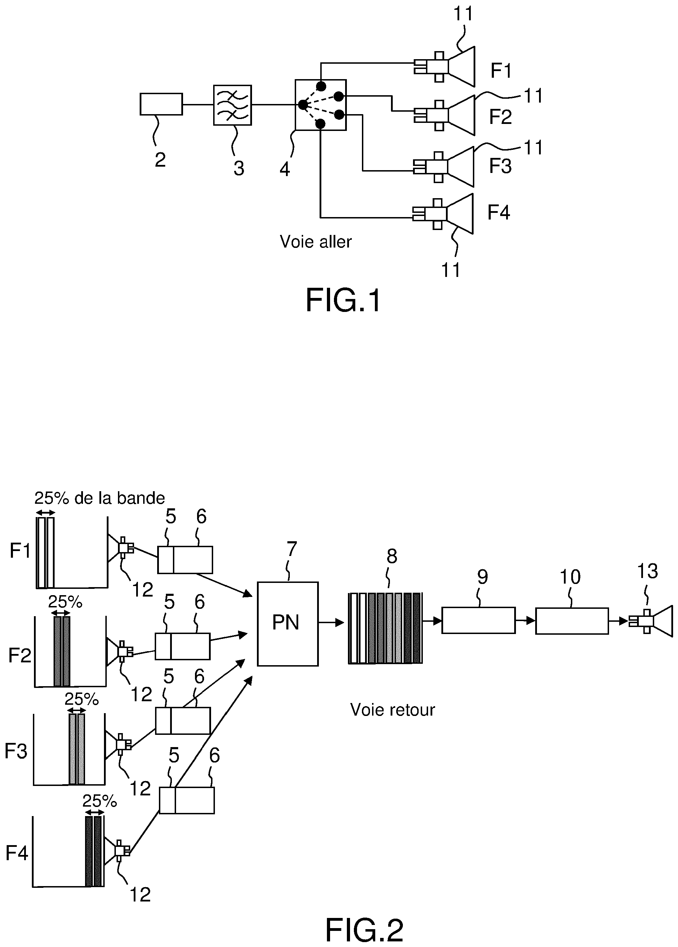

La figure 1 représente schématiquement une charge utile avec voie aller en sauts de faisceaux, ou "beam hopping" dans un schéma de partage de la ressource d'un tube de 1 vers N faisceaux, en l'espèce 4 faisceaux F1, F2, F3, F4 dans les exemples représentés, de manière non limitative. En effet, l'invention s'applique quel que soit le nombre N de faisceaux, mais est illustré avec 4 faisceaux dans la présente demande.

La charge utile voie aller comprend, disposés en série, un amplificateur haute puissance ajustable 2, un filtre 3, et un dispositif à saut de faisceaux 4 (par exemple 3 commutateurs ferrite 4 ou "switches ferrite" en langue anglaise, sur deux étages) permettant de répartir, par commutations, l'allocation sur les différents faisceaux F1, F2, F3, F4, respectivement associés à des sources antennes respectives 11 d'émission.

L'amplificateur haute puissance peut être un tube à ondes progressives ou un amplificateur de puissance à état solide.

En voie retour chaque faisceau F1, F2, F3, F4 se voit attribuer la bande maximale nécessaire pour couvrir le cas d'utilisation maximale de ce faisceau en voie aller. Cette bande réceptionnée au niveau charge utile est amplifiée et convertie en fréquences afin d'être compatible de la bande de fréquences d'entrée d'un processeur numérique PN.

Le processeur numérique peut être un processeur numérique transparent ou un processeur numérique régénératif.

Le processeur numérique PN agrège ensuite les bandes réellement utilisées des différents faisceaux au prorata du partage temporel fait au niveau du "beam hopping" pour la voie aller.

Le principe est illustré sur la figure 2 avec comme hypothèse un partage équi-temporel en voie aller attribuant, comme sur cet exemple représenté 25% du temps à chacun des quatre faisceaux F1, F2, F3, F4.

Chaque ensemble amplificateur 5 et convertisseur de fréquences 6 par faisceau de réception reçoit un des faisceau reçu par une source antenne 12 de réception et l'adapte pour le transmettre à une entrée respective du processeur numérique PN qui agrège ensuite les bandes réellement utilisées des différents faisceaux au prorata du partage temporel fait au niveau du "beam hopping" pour la voie aller. En l'espèce le prorata est de 25% pour chaque bande de fréquences comme illustré sur le signal 8 de sortie du processeur numérique PN.

Le signal 8 de sortie du processeur numérique PN est ensuite converti par un convertisseur 9 permettant de relever les fréquences, puis amplifié par un amplificateur de puissance 10, et émis par une source antenne 13 d'émission vers l'utilisateur final.

Sur les figures le choix a été fait de positionner les quatre faisceaux F1, F2, F3, F4 sur des fréquences différentes pour des raisons de compréhension (de manière non limitative), mais les quatre faisceaux F1, F2, F3, F4 peuvent être positionnés ou non sur la même bande de fréquences, car après leur numérisation dans le processeur numérique PN, la fréquence en sortie du processeur numérique PN est choisie de manière à juxtaposer les bandes de fréquences correspondantes dans la bande disponible pour la voie retour. C'est donc uniquement après le processeur numérique PN que ces bandes de fréquences doivent se juxtaposer.

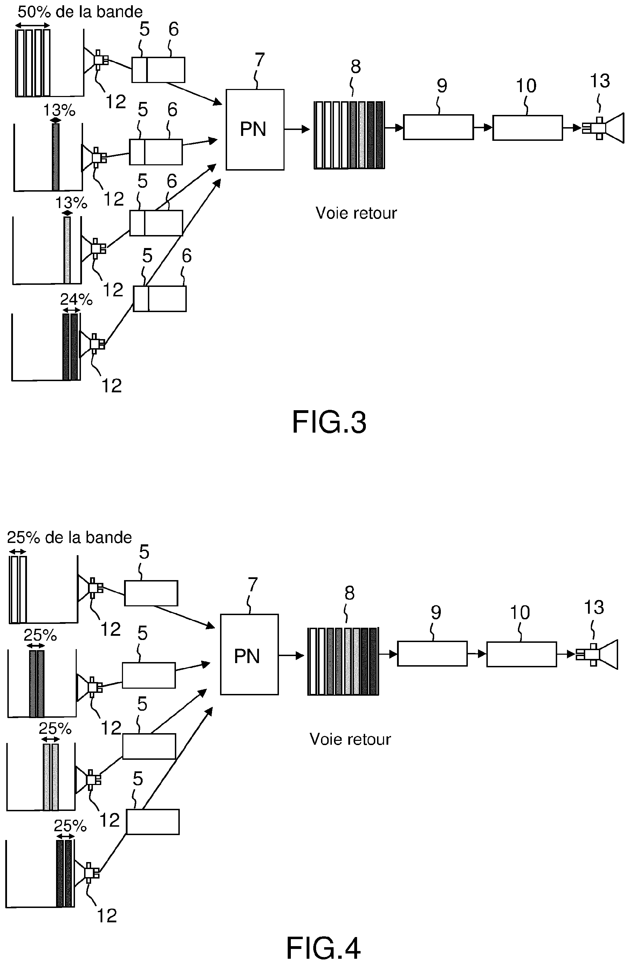

La figure 3 illustre le même système, avec un fonctionnement dans lequel un partage différent non equi-temporel est effectué en voie aller. En l'espèce le système est représenté avec un partage différent non equi-temporelle en voie aller attribuant 50% du temps au spot de faisceau F1, 13% au spot de faisceau F2, 13% au spot de faisceau F3, et 24% au spot de faisceau F4. En l'espèce, on retrouve après le processeur numérique PN le signal 8 comprenant la somme de la bande des signaux en entrée au prorata temporel d'émission de la voie aller.

La présente invention permet de ne pas nécessiter de sauts de faisceaux ou "beam hopping" en voie retour, et permet de garder un ratio de capacité aller/retour constant même en faisant varier le pourcentage de partage temporel en voie aller.

La présente invention permet également de ne pas réduire le débit crête accessible à un utilisateur, et nécessite un niveau limité de traitement supplémentaire pour le processeur numérique PN.

Par exemple, dans un scénario où 50% des faisceaux sont à forte demande et 50% à faible demande, on associe du beam hopping 1 vers 4 pour les faisceaux à faible demande et pas de beam hopping pour les autres (donc pas de partage temporel). Dans ce cas pour 100 GHz de bande de fréquences utilisée en voie aller pour les faisceaux à forte demande, ¼ soit 25 GHz de bande de fréquences sont utilisés en voie aller pour les faisceaux à faible demande. Soit aussi une demande de ratio de bande de fréquences voie aller/voie retour de 1/3 avec possibilité de mettre pour les faisceaux à faible demande toute la capacité dans un seul des quatre faisceaux associés si nécessaire (partage temporel entre les 4 faisceaux pouvant attribuer jusqu'à toute la capacité à un seul faisceau).

Dans le cas de l'invention en voie retour il y aura 100*1/3+25*4/3=66.66 GHz qui s'ajoutent à la bande de fréquences de la voie aller de 100+25=125GHz soit 192.66GHz de bande de fréquences totale à traiter par le processeur numérique PN.

Dans le cas minimisant la bande passante à traiter pour le processeur numérique PN avec du beam hopping en voie retour il y a 100*1/3+25*1/3=41.66 GHz qui s'ajoutent à la bande de fréquences de la voie aller de 100+25=125GHz soit 166.66 GHz de bande de fréquences totale à traiter par le processeur numérique PN. Soit une augmentation modérée de bande de 15% à traiter par le processeur numérique PN dans le cadre de l'invention avec pour bénéfices qu'un utilisateur isolé dans un faisceau ne voit pas son débit crête réduit en voie retour, et que les mécanismes de sauts de faisceaux ne sont pas nécessaires en voie retour. Ainsi, lorsque N spots (en l'espèce 4 dans les exemples décrits de manière non limitative) sont associés en sauts de faisceaux ou "beam hopping" en voie aller, le principe consiste à utiliser le processeur numérique PN afin d'extraire, pour chaque spot d'indice i, les Ni% de la bande totale accessible en voie retour qui sont effectivement utilisés, avant de les multiplexer fréquentiellement. Les coefficients Ni respectent la contrainte ΣNi%=100%, et leur distribution est équivalente à la distribution temporelle des ressources sur la voie aller.

La figure 4 représente un système selon un aspect de l'invention, similaire à celui des figures 2 et 3, avec comme hypothèse un partage equi-temporel en voie aller attribuant, comme sur cet exemple représenté 25% du temps à chacun des quatre faisceaux F1, F2, F3, F4, comme pour la figure 2.

Dans cette variante, la bande de fréquences de réception est directement compatible des fréquences d'entrée du processeur numérique PN, aussi l'étape de conversion de fréquences n'est pas nécessaire, et le système est donc dépourvu de convertisseur 6.

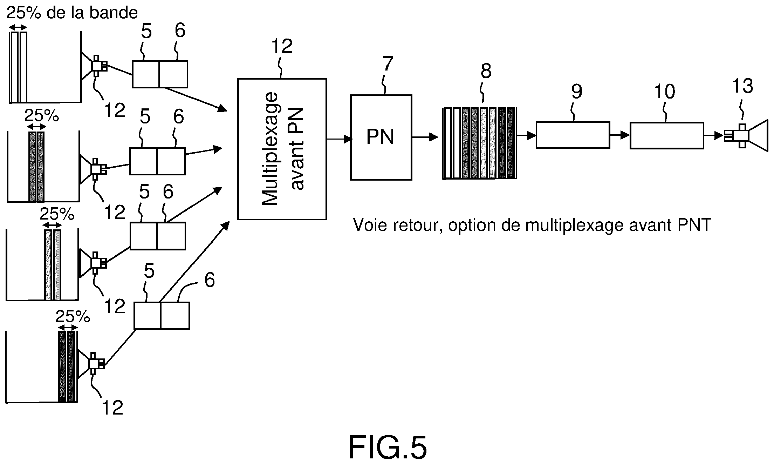

La figure 5 représente un système selon un aspect de l'invention, similaire à celui des figures 2 et 3, avec comme hypothèse un partage equi-temporel en voie aller attribuant, comme sur cet exemple représenté 25% du temps à chacun des quatre faisceaux F1, F2, F3, F4, comme pour la figure 2.

Dans cette variante, les bandes de fréquences correspondant aux différents faisceaux F1, F2, F3, F4 peuvent être multiplexées par un multiplexeur 14 utilisant des filtres permettant de limiter le nombre d'entrées nécessaire au niveau du processeur numérique PN, en l'espèce une seule entrée, mais de manière non limitative.

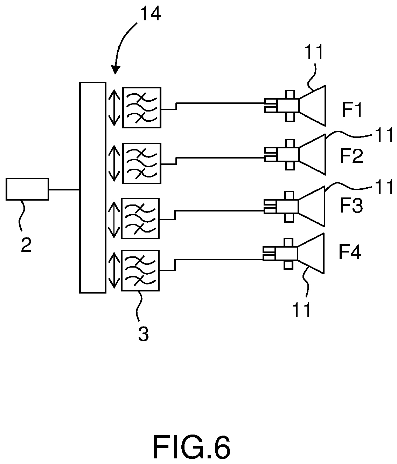

Cette variante introduit un filtre pour multiplexer les quatre faisceaux F1, F2, F3, F4 en amont du PN afin d'en limiter le nombre d'entrée, dans ce cas ces bandes ne doivent pas se superposer pour que le multiplexage soit possible. En variante, comme illustré sur la figure 6, il est aisé d'adapter l'invention pour l'appliquer au cas d'une flexibilité en bande (filtre adaptable en bande de fréquences 12 au lieu d'une flexibilité temporelle 4) en voie aller qui permet aussi de maximiser l'utilisation d'amplificateur de forte puissance (par exemple une charge utile avec en voie aller un démultiplexeur de sortie flexible adaptable en bande de fréquences dans un schéma de partage de la ressource d'un amplificateur haute puissance e 1 vers N faisceaux.

## Revendications

1. Système de télécommunications multifaisceaux (F1, F2, F3, F4) par satellites comprenant au moins un satellite muni d'au moins un amplificateur haute puissance (2), un processeur numérique (7), et des moyens de mise en œuvre (4) de saut de faisceaux en voie aller, sans sauts de faisceaux en voie retour, **caractérisé en ce que** le processeur numérique (7) étant configuré pour numériser les faisceaux en voie retour et les agréger, la largeur de bande des faisceaux (F1, F2, F3, F4) en voie retour étant proportionnelle à la répartition temporelle sur les faisceaux (F1, F2, F3, F4) en voie aller.

2. Système selon la revendication 1, dans lequel l'amplificateur haute puissance (2) est un tube à ondes progressives ou un amplificateur de puissance à état solide.

3. Système selon la revendication 1 ou 2, dans lequel le processeur numérique (7) est un processeur numérique transparent ou un processeur numérique régénératif.

4. Système selon l'une des revendications précédentes, comprenant, par faisceau (F1, F2, F3, F4) en voie retour, un amplificateur (5) en amont du processeur numérique (7).

5. Système selon la revendication 4, comprenant, par faisceau en voie retour, un convertisseur de fréquences (6) en aval de l'amplificateur (5) et en amont du processeur numérique (7).

6. Système selon la revendication 4 ou 5, comprenant, par faisceau en voie retour, un multiplexeur (14) en aval du convertisseur de fréquences (6) et en amont du processeur numérique (7).

7. Système selon l'une des revendications précédentes, comprenant, en voie retour, en aval du processeur numérique (7), un convertisseur de fréquences (9), un amplificateur de puissance (10) et une source antenne (13) d'émission, disposés en série.

8. Procédé de gestion d'un processeur numérique (7) d'un satellite de système de télécommunications multifaisceaux par satellites à sauts de faisceaux en voie aller et sans sauts de faisceaux en voie retour, **caractérisé en ce que** le processeur numérique (7) numérise les faisceaux en voie retour et les agrège, la largeur de bande des faisceaux (F1, F2, F3, F4) en voie retour étant proportionnelle à la répartition temporelle sur les faisceaux (F1, F2, F3, F4) en voie aller.

## Patentansprüche

1. Mehrstrahliges (F1, F2, F3, F4) Satelliten-Telekommunikationssystem, umfassend mindestens einen Satelliten, welcher mit mindestens einem Hochleistungsverstärker (2), einem digitalen Prozessor (7) und Mitteln zur Implementierung (4) von Beam-Hopping im Vorwärtskanal, ohne Beam-Hopping im Rückwärtskanal, versehen ist, **dadurch gekennzeichnet, dass** der digitale Prozessor (7) konfiguriert ist, um die Strahlen im Rückwärtskanal zu digitalisieren und zu aggregieren, wobei die Bandbreite der Strahlen (F1, F2, F3, F4) im Rückwärtskanal proportional zur zeitlichen Verteilung auf die Strahlen (F1, F2, F3, F4) im Vorwärtskanal ist.

2. System nach Anspruch 1, wobei der Hochleistungsverstärker (2) eine Wanderfeldröhre oder ein Festkörper-Leistungsverstärker ist.

3. System nach Anspruch 1 oder 2, wobei der digitale Prozessor (7) ein transparenter digitaler Prozessor oder ein regenerativer digitaler Prozessor ist.

4. System nach einem der vorhergehenden Ansprüche, umfassend, pro Strahl (F1, F2, F3, F4) im Rückwärtskanal, einen Verstärker (5) im vorgelagerten Bereich des digitalen Prozessors (7).

5. System nach Anspruch 4, umfassend, pro Strahl im Rückwärtskanal, einen Frequenzumwandler (6) im nachgelagerten Bereich des Verstärkers (5) und im vorgelagerten Bereich des digitalen Prozessors (7).

6. System nach Anspruch 4 oder 5, umfassend, pro Strahl im Rückwärtskanal, einen Multiplexer (14) im nachgelagerten Bereich des Frequenzumwandlers (6) und im vorgelagerten Bereich des digitalen Prozessors (7).

7. System nach einem der vorhergehenden Ansprüche, umfassend, im Rückwärtskanal, im nachgelagerten Bereich des digitalen Prozessors (7), einen Frequenzumwandler (9), einen Leistungsverstärker (10) und eine Sendeantennen-Quelle (13), welche in Reihe angeordnet sind.

8. Verfahren zur Verwaltung eines digitalen Prozessors (7) eines Satelliten eines mehrstrahligen Satelliten-Telekommunikationssystems mit Beam-Hopping im Vorwärtskanal und ohne Beam-Hopping im Rückwärtskanal, **dadurch gekennzeichnet, dass** der digitale Prozessor (7) die Strahlen im Rückwärtskanal digitalisiert und aggregiert, wobei die Bandbreite der Strahlen (F1, F2, F3, F4) im Rückwärtskanal proportional zur zeitlichen Verteilung auf die Strahlen (F1, F2, F3, F4) im Vorwärtskanal ist.

## Claims

1. A satellite multibeam (F1, F2, F3, F4) telecommunication system comprising at least one satellite provided with at least one high-power amplifier (2), a digital processor (7), and means for implementing (4) forward link beam hopping, without return link beam hopping, **characterised in that** the digital processor (7) is configured to digitise the return link beams and to aggregate them, the bandwidth of the return link beams (F1, F2, F3, F4) being proportional to the temporal distribution on the forward link beams (F1, F2, F3, F4).

2. The system according to claim 1, wherein the high-power amplifier (2) is a traveling wave tube or a solid-state power amplifier.

3. The system according to claim 1 or 2, wherein the digital processor (7) is a transparent digital processor or a regenerative digital processor.

4. The system according to one of the preceding claims, comprising, for each return link beam (F1, F2, F3, F4), an amplifier (5) upstream of the digital processor (7).

5. The system according to claim 4, comprising, for each return link beam, a frequency converter (6) downstream of the amplifier (5) and upstream of the digital processor (7).

6. The system according to claim 4 or 5, comprising, for each return link beam, a multiplexer (14) downstream of the frequency converter (6) and upstream of the digital processor (7).

7. The system according to one of the preceding claims, comprising, in the return link, downstream of the digital processor (7), a frequency converter (9), a power amplifier (10) and a transmission antenna feed (13), disposed in series.

8. A method for managing a digital processor (7) of a satellite of a satellite multibeam telecommunication system with forward link beam hopping and without return link beam hopping, **characterised in that** the digital processor (7) digitises and aggregates the return link beams, the bandwidth of the return link beams (F1, F2, F3, F4) being proportional to the temporal distribution on the forward link beams (F1, F2, F3, F4).
